# FASCICULE DE BREVET EUROPEEN

(11) **EP 2 817 492 B1**
(45) Date de publication et mention de la délivrance du brevet: **25.05.2016**
(21) Numéro de dépôt: 13710483.2
(22) Date de dépôt: 19.02.2013
(51) Int. Cl.: F01D 21/00, F04D 13/04, F04D 15/00, F02C 9/00, F01D 17/06, F01D 17/08, F02K 9/48

(54) **PROCÉDÉ DE SÉCURISATION DU FONCTIONNEMENT D'UNE TURBOMACHINE**
VERFAHREN ZUR SICHERUNG DES BETRIEBS EINER TURBOMASCHINE
METHOD FOR SECURING THE OPERATION OF A TURBOMACHINE

(30) Priorité: 20.02.2012 FR 1251531
(43) Date de publication de la demande: 31.12.2014
(73) Titulaire: SNECMA, 75015 Paris (FR)
(72) Inventeur: LEMAITRE, Alban, F-27200 Vernon (FR); LE GONIDEC, Serge, F-27200 Vernon (FR)
(74) Mandataire: Intès, Didier Gérard André
(86) Numéro de dépôt international: PCT/FR2013/050339
(87) Numéro de publication internationale: WO 2013/124578

(56) Documents cités:
- EP-A2- 1 918 530
- WO-A1-2007/033914
- US-B1- 6 321 525

## Description

La présente invention se rapporte au domaine des procédés de sécurisation du fonctionnement de l'ensemble tournant d'une turbomachine, notamment celui d'une turbopompe, par exemple celui d'une turbopompe adaptée pour être utilisée pour la propulsion d'une fusée.

Plus précisément, la présente invention concerne un procédé de sécurisation du fonctionnement de l'ensemble tournant d'une turbomachine, lequel ensemble tournant comporte une turbine dont la rotation est générée par la détente d'un fluide d'entrainement qui est destiné à s'écouler à travers la turbine, et une machine tournante qui est entraînée mécaniquement en rotation par la turbine de manière à déplacer un fluide entrainé qui est destiné à s'écouler à travers la machine tournante.

Le dépassement d'un seuil de vitesse prédéterminé peut en particulier être considéré comme un incident majeur dans le fonctionnement de la turbomachine, notamment lorsque cette dernière perd son couple résistant tandis que sa turbine continue d'être propulsée à une puissance donnée, engendrant ainsi un départ en survitesse de l'ensemble tournant de la turbomachine pouvant aller jusqu'à son éclatement dans les cas les plus graves. Des techniques connues de protection en survitesse dans une turbomachine sont décrites dans le document US 6321525.

Dans le cas particulier d'une turbopompe, la chute abrupte du couple résistant peut être causée par un décrochage de la pompe résultant d'un changement dans les conditions d'écoulement du fluide entrainé qui est destiné à s'écouler à travers la pompe.

En particulier, il est souvent nécessaire d'augmenter la vitesse de rotation de la pompe pour répondre à un besoin en débit du fluide entrainé. L'augmentation de la vitesse d'écoulement du fluide entrainé qui en résulte induit en retour une augmentation du risque d'apparition du phénomène de cavitation dans les aubes de la pompe. Or le phénomène de cavitation est susceptible de faire chuter significativement le couple résistant appliqué par la pompe sur l'ensemble tournant et donc d'autoriser un départ en survitesse de ce dernier.

On connaît déjà un procédé conventionnel permettant d'opérer un arrêt d'urgence d'une turbopompe lorsque cette dernière subit un départ en survitesse. Ce procédé conventionnel consiste en la mesure de la vitesse de rotation de l'ensemble tournant de la turbopompe, et en le déclenchement de l'ouverture d'une vanne pyrotechnique de dérivation du fluide d'entrainement qui est disposée en parallèle de la turbine, en amont de l'entrée de cette dernière, lorsque la vitesse de rotation mesurée dépasse un seuil prédéterminé.

Ainsi, grâce à ce procédé conventionnel, le débit du fluide d'entrainement est dévié de l'entrée de la turbine de manière à faire chuter le couple moteur appliqué par la turbine sur l'ensemble tournant de la turbopompe, une fois que la vanne pyrotechnique a été ouverte, de sorte que la vitesse de rotation de l'ensemble tournant cesse ensuite d'augmenter.

Un inconvénient majeur de ce procédé conventionnel est que l'ouverture de la vanne pyrotechnique n'est déclenchée qu'à un instant ultérieur à celui auquel intervient le dépassement du seuil prédéterminé par la vitesse de rotation réelle de l'ensemble tournant. En d'autres termes, l'ouverture de la vanne pyrotechnique ne peut être déclenchée que seulement après avoir pu constater que la vitesse de rotation réelle de l'ensemble tournant était effectivement devenue supérieure au seuil prédéterminé.

Il en résulte qu'il existe nécessairement un retard entre l'instant au cours duquel la vitesse de rotation réelle de l'ensemble tournant de la turbopompe atteint le seuil prédéterminé et l'instant au cours duquel la vanne pyrotechnique est effectivement ouverte. Dès lors, bien que l'ampleur de ce retard puisse être minimisée par la grande réactivité de la pyrotechnie utilisée pour l'ouverture de la vanne, la vitesse de rotation de l'ensemble tournant continue d'augmenter significativement (de surcroît non linéairement) entre l'instant de franchissement du seuil et l'instant d'ouverture effective de la vanne. Il en résulte que le risque de voir la turbopompe absorber sur son inertie une énergie causant des dégradations est grand lorsque l'on utilise ce procédé conventionnel.

Il existe par conséquent un besoin pressant pour la mise au point d'un procédé de sécurisation permettant d'agir plus rapidement sur le fonctionnement d'une turbomachine pour limiter l'ampleur du dépassement en vitesse de son ensemble tournant par rapport à un seuil de vitesse prédéterminé.

La présente invention propose de réaliser un tel procédé.

Plus précisément, un procédé selon un aspect de la présente invention comprend un procédé de sécurisation du fonctionnement d'un ensemble tournant d'une turbomachine, lequel ensemble tournant comprend une turbine dont la rotation est générée par la détente d'un fluide d'entrainement qui est destiné à s'écouler à travers la turbine, et une machine tournante qui est entraînée mécaniquement en rotation par la turbine de manière à déplacer un fluide entrainé qui est destiné à s'écouler à travers la machine tournante.

Dans ce procédé de sécurisation, on anticipe le dépassement par l'ensemble tournant d'un seuil de vitesse prédéterminé en réalisant répétitivement un cycle de prédiction au cours duquel :
- on mesure les grandeurs suivantes dans un intervalle de temps prédéterminé :
   o une vitesse de rotation réelle de l'ensemble tournant à un instant d'observation donné dudit intervalle de temps ;
   o au moins un paramètre « interaction fluide/turbine » qui est significatif de l'interaction entre la turbine et le fluide d'entrainement ;
   o au moins un paramètre « interaction fluide/machine tournante » qui est significatif de l'interaction entre la machine tournante et le fluide entrainé ;
- on estime le couple moteur appliqué par la turbine à l'ensemble tournant, à partir de ladite vitesse de rotation réelle et dudit au moins un paramètre « interaction fluide/turbine » ;
- on estime, indépendamment de l'estimation dudit couple moteur, le couple résistant appliqué par la machine tournante à l'ensemble tournant, à partir de ladite vitesse de rotation réelle et dudit au moins un paramètre « interaction fluide/machine tournante » ;
- on élabore une valeur représentative de la différence entre ledit couple moteur et ledit couple résistant ;
- on calcule une vitesse de rotation de prédiction de l'ensemble tournant à un instant de prédiction ultérieur audit instant d'observation, à partir de ladite vitesse de rotation réelle, de ladite valeur représentative, et de l'écart de temps entre l'instant de prédiction et l'instant d'observation ;
- on détermine qu'une première condition est vérifiée si ladite vitesse de rotation de prédiction dépasse un seuil de vitesse prédéterminé.

Dans ce procédé de sécurisation, on opère une action sur le fonctionnement de la turbomachine pour limiter l'ampleur du dépassement en vitesse de son ensemble tournant par rapport audit seuil s'il est déterminé au cours du cycle de prédiction qu'au moins la première condition est vérifiée.

On comprend que, grâce à ce procédé de sécurisation, on peut ainsi calculer une vitesse de rotation dite de prédiction qu'adoptera l'ensemble tournant de la turbomachine à un instant de prédiction futur qui n'a pas encore eu lieu (i.e. à un instant de prédiction qui est ultérieur à l'instant au cours duquel on mesure une vitesse de rotation réelle de l'ensemble tournant de la turbomachine, et qui est de préférence ultérieur à l'instant au cours duquel on détermine si ladite vitesse de rotation de prédiction dépasse ou non le seuil de vitesse prédéterminé).

Il en résulte que l'on peut ainsi agir sur le fonctionnement de la turbomachine non pas avec un retard par rapport à l'instant précis où la vitesse de rotation réelle de l'ensemble tournant atteint effectivement le seuil de vitesse prédéterminé, mais au contraire en avance par rapport à cet instant du fait que l'on peut anticiper par sa prédiction la vitesse de rotation qu'adoptera l'ensemble tournant à un instant futur.

En d'autres termes, grâce à ce procédé de sécurisation, on peut anticiper le dépassement d'un seuil de vitesse prédéterminé du fait que l'on calcule une vitesse de rotation de prédiction de l'ensemble tournant au cours du cycle de prédiction.

Dans certains modes de réalisation, on détermine au cours du cycle de prédiction que la première condition est vérifiée si la vitesse de rotation de prédiction est supérieure au seuil de vitesse prédéterminé.

On comprend que le procédé de sécurisation ainsi configuré permet d'anticiper l'instant au cours duquel une vitesse de l'ensemble tournant deviendra supérieure à une vitesse maximale prédéterminée.

Dès lors, le procédé de sécurisation ainsi configuré peut, par exemple, être mis à profit pour éviter l'endommagement de la turbomachine lorsque l'ensemble tournant de cette dernière subit un départ en survitesse.

Pour ce faire, il est préférable que l'on choisisse un seuil de vitesse prédéterminé dit « haut » dont la valeur est caractéristique de ce départ en survitesse, et que l'on détermine au cours du cycle de prédiction que la première condition est vérifiée si la vitesse de rotation de prédiction est supérieure à ce seuil de vitesse caractéristique.

Dans certains modes de réalisation, le procédé de sécurisation peut permettre de tester les performances limites de la turbomachine, notamment lorsque cette dernière est destinée à être montée sur un banc d'essai. Son départ en survitesse peut alors être, au choix, volontairement provoqué ou non. Dans tous les cas, le procédé de sécurisation peut permettre d'empêcher l'endommagement de la turbomachine pendant que l'on fait travailler cette dernière dans ses limites de conception.

Dans certains modes de réalisation, on détermine au cours du cycle de prédiction que la première condition est vérifiée si la vitesse de rotation de prédiction est inférieure au seuil de vitesse prédéterminé.

On comprend que le procédé de sécurisation ainsi configuré permet d'anticiper l'instant au cours duquel une vitesse de l'ensemble tournant deviendra inférieure à une vitesse minimale prédéterminée.

Dès lors, le procédé de sécurisation ainsi configuré peut être mis à profit, par exemple, pour limiter l'ampleur d'un décrochage accidentel de la vitesse de rotation de l'ensemble tournant de la turbomachine.

Pour ce faire, il est préférable que l'on choisisse un seuil de vitesse prédéterminé dit « bas » dont la valeur correspond à une vitesse de rotation minimale acceptable pour l'ensemble tournant de la turbomachine.

Dans certains modes de réalisation, le procédé de sécurisation peut être mis à profit pour prédire un dépassement par, au choix, valeurs inférieurs ou supérieures d'une vitesse de rotation de consigne, et partant, permettre un rétablissement plus rapide de la vitesse désirée.

Dans certains modes de réalisation, ladite action opérée sur le fonctionnement de la turbomachine comprend un arrêt d'urgence de cette turbomachine.

Dans certains modes de réalisation, au choix en alternative ou en combinaison avec un tel arrêt d'urgence, ladite action opérée comprend une modification (i.e., au choix, une augmentation ou une diminution) d'au moins le débit du fluide d'entrainement en entrée de la turbine.

On comprend que l'on peut ainsi modifier (i.e., au choix, augmenter ou diminuer) le couple moteur qu'applique la turbine sur l'ensemble tournant de manière à modifier (i.e., au choix, augmenter ou diminuer) la vitesse de rotation réelle de ce dernier.

Dans certains modes de réalisation, on peut réaliser une telle modification de débit en modifiant le degré d'ouverture d'au moins une vanne disposée, au choix, en amont ou en parallèle de l'entrée de la turbine. On peut ainsi, au choix, ouvrir davantage ou fermer davantage ladite vanne.

On peut, par exemple, réguler le débit du fluide d'entrainement en entrée de la turbine, notamment pour asservir la vitesse de rotation de l'ensemble tournant.

Par ailleurs, dans certains modes de réalisation, on peut déclencher l'ouverture au moins partielle (de préférence l'ouverture complète) d'au moins une vanne de dérivation disposée en parallèle de l'entrée de la turbine pour diminuer le débit du fluide d'entrainement en entrée de la turbine.

On comprend que, lorsque le procédé de sécurisation ainsi configuré vise à limiter l'ampleur d'un départ en survitesse de l'ensemble tournant de la turbomachine, on peut à l'aide d'une telle vanne de dérivation faire diminuer le couple moteur appliqué par la turbine à l'ensemble tournant pour empêcher la dégradation de ce dernier. L'ouverture de cette vanne de dérivation peut en effet être opérée par anticipation à un instant antérieur à celui au cours duquel la vitesse de rotation réelle de l'ensemble tournant atteint le seuil de vitesse prédéterminé.

Dans certains modes de réalisation, la vanne de dérivation est une vanne pyrotechnique dont l'ouverture (de préférence complète) est déclenchée par pyrotechnie de manière à minimiser le temps de réaction de cette vanne (i.e. le temps écoulé entre l'instant au cours duquel l'ordre d'ouvrir la vanne de dérivation est donné et l'instant au cours duquel cette vanne est effectivement dans un état d'ouverture).

Dans certains modes de réalisation, on peut déterminer au cours du cycle de prédiction qu'une deuxième condition est ou non vérifiée en fonction de conditions particulières de fonctionnement de la turbomachine.

En particulier, dans certains modes de réalisation, on peut déterminer au cours du cycle de prédiction qu'une telle deuxième condition est vérifiée si la turbomachine n'est pas en régime transitoire de fonctionnement.

Dans certains modes de réalisation, ladite action sur le fonctionnement de la turbomachine peut être opérée s'il est déterminé au cours du cycle de prédiction qu'au moins les première et deuxième conditions sont toutes deux vérifiées.

On comprend que l'on peut ainsi éviter d'intempestivement opérer ladite action lorsque la turbomachine se trouve en régime transitoire de fonctionnement (i.e. en dehors de son régime de fonctionnement permanent), en particulier lors de ses phases de démarrage et d'arrêt au cours desquelles la valeur de la vitesse de prédiction calculée est peu précise du fait que les couples moteur et résistant varient rapidement lors de ces phases.

Dans certains modes de réalisation, pour élaborer au cours du cycle de prédiction une valeur représentative de la différence entre le couple moteur et le couple résistant qui est plus précise, on corrige au moins un des couples estimés parmi le couple moteur et le couple résistant pour atténuer les bruits de mesure associés aux grandeurs mesurées.

En particulier, dans certains modes de réalisation, on peut opérer un filtrage sur au moins un des couples estimés parmi le couple moteur et le couple résistant en connaissant préalablement les caractéristiques en bruits des grandeurs mesurées.

Dans certains modes de réalisation, un tel filtrage peut être un filtrage fréquentiel, en particulier de type passe-bas avec de préférence une fréquence de coupure qui est choisie en fonction des fréquences caractéristiques des bruits associés aux grandeurs mesurées.

Dans certains modes de réalisation, on peut utiliser, par exemple et au choix, un filtrage numérique (en particulier un filtrage récursif), ou un tout autre type de filtrage, pourvu seulement que l'on puisse atténuer par ce filtrage les bruits de mesure associés aux grandeurs mesurées.

Dans certains modes de réalisation, au choix en alternative ou en combinaison avec la correction précédente, on peut atténuer le biais de valeurs qui existe entre le couple moteur et le couple résistant du fait qu'ils sont estimés indépendamment l'un de l'autre pour élaborer au cours du cycle de prédiction une valeur représentative de la différence entre le couple moteur et le couple résistant plus précise.

En effet, par l'expression « estimés indépendamment l'un de l'autre », on entend préciser que les estimations des couples moteur et résistant sont réalisées à partir respectivement de premier et deuxième modèles d'estimation qui sont au moins partiellement décorrélés l'un de l'autre, par exemple complètement décorrélés.

Cette décorrélation au moins partielle peut par exemple se traduire par le fait qu'au moins un paramètre « interaction fluide/turbine » mesuré est utilisé exclusivement pour l'estimation du couple moteur, tandis qu'au moins un paramètre « interaction fluide/machine tournante » mesuré est utilisé exclusivement pour l'estimation du couple résistant.

Cette décorrélation au moins partielle des modèles d'estimation des couples moteur et résistant peut permettre de limiter la présence de bruits systématiques dans la valeur représentative de la différence entre ces deux couples que l'on élabore.

En revanche, du fait de cette décorrélation, à vitesse de rotation de l'ensemble tournant sensiblement constante, la valeur estimée du couple moteur peut différer de la valeur estimée du couple résistant alors qu'en réalité elles devraient être sensiblement identiques. Cette différence intempestive de valeurs constitue un biais de valeurs qui résulte du fait que les couples moteur et résistant sont estimés indépendamment l'un de l'autre.

Dans certains modes de réalisation, on peut opérer un filtrage sur, au choix, la différence de couple entre le couple moteur et le couple résistant que l'on calcule, une valeur dérivant du couple moteur estimé, ou une valeur dérivant du couple résistant estimé, pour obtenir une valeur représentative de cette différence de couple dont le biais de valeurs est atténué.

Dans certains modes de réalisation, un tel filtrage peut être un filtrage fréquentiel, en particulier de type passe-haut, par exemple de manière à ce que la bande passante de la correction de ce biais de valeurs soit lente vis-à-vis d'une dynamique de vitesse de rotation de l'ensemble tournant de la turbomachine, notamment d'une dynamique de départ en survitesse.

Dans certains modes de réalisation, on peut utiliser, par exemple et au choix, un filtrage numérique (en particulier un filtrage récursif), ou un tout autre type de filtrage, pourvu seulement que l'on puisse atténuer par ce filtrage le biais de valeurs que les estimations des couples moteur et résistant introduisent du fait qu'elles sont indépendantes l'une de l'autre.

Dans certains modes de réalisation, on peut opérer, notamment à l'aide d'un filtre de poursuite, un filtrage sur l'un des deux couples estimés parmi le couple moteur et le couple résistant de manière à faire converger ledit un des deux couples vers l'autre de ces deux couples, ce qui permet de diminuer le biais de valeurs lorsqu'on calcule ensuite leur différence. On peut pour ce faire utiliser un intégrateur.

Par ailleurs, dans certains modes de réalisation, on peut effectuer les deux corrections précédemment décrites en combinaison l'une de l'autre, pour élaborer ladite valeur représentative au cours du cycle de prédiction.

En particulier, dans certains modes de réalisation, on peut corriger le couple moteur et le couple résistant pour atténuer les bruits de mesure associés aux grandeurs mesurées, puis calculer la différence entre le couple moteur corrigé et le couple résistant corrigé, puis corriger cette différence pour atténuer ledit biais de valeurs.

Dans certains modes de réalisation, on peut corriger le couple moteur et le couple résistant pour atténuer les bruits de mesure associés aux grandeurs mesurées, puis opérer, notamment à l'aide d'un filtre de poursuite, un filtrage sur l'un des deux couples parmi le couple moteur ainsi corrigé et le couple résistant ainsi corrigé de manière à faire converger ledit un des deux couples vers l'autre de ces deux couples, puis calculer la différence entre ledit un des deux couples ainsi filtré et l'autre des deux couples.

Par ailleurs, le modèle d'estimation du couple moteur (respectivement du couple résistant) est de préférence construit comme étant une loi empirique qui peut notamment être élaborée à partir d'un tableau de correspondance entre d'une part des relevés de valeurs de la vitesse de rotation réelle et du ou de chaque paramètre « interaction fluide/turbine » (respectivement du ou de chaque paramètre « interaction fluide/machine tournante) utilisé dans ce modèle, et d'autre part le comportement de la turbomachine.

Dans certains modes de réalisation, au cours du cycle de prédiction, on mesure trois paramètres « interaction fluide/turbine » qui consistent respectivement en une pression en entrée de la turbine, une pression en sortie de la turbine, et une température en entrée de la turbine du fluide d'entrainement ; et on estime le couple moteur à partir de la vitesse de rotation réelle et de ces trois paramètres « interaction fluide/turbine ».On peut ainsi exploiter des mesures de conditions aux interfaces de la turbomachine, notamment de sa turbine, pour obtenir de tels paramètres « interaction fluide/turbine » qui contribuent à l'estimation du couple moteur.

Dans certains modes de réalisation, pour permettre cette estimation, on peut construire un modèle d'estimation du couple moteur, via un paramétrage lors d'une étape d'étalonnage du procédé à effectuer préalablement à la réalisation du cycle de prédiction.

En particulier, au cours de cette étape d'étalonnage, on peut mesurer d'une part le couple moteur (par exemple à l'aide d'un couplemètre), et d'autre part les valeurs adoptées par d'autres paramètres pour chaque couple moteur ainsi mesuré (en particulier, les valeurs adoptées par chacun des paramètres suivants : une vitesse de rotation réelle de la turbomachine ; une pression en entrée de la turbine du fluide d'entrainement ; une pression en sortie de la turbine du fluide d'entrainement ; et une température en entrée de la turbine du fluide d'entrainement).

Puis, au cours de cette étape d'étalonnage, on peut élaborer une loi empirique du couple moteur en fonction desdits autres paramètres, à partir du tableau de correspondance entre les différents relevés de valeurs ainsi préalablement mesurées.

Cette loi empirique peut alors servir de modèle d'estimation du couple moteur lors du cycle de prédiction du procédé de sécurisation.

Opter pour un modèle empirique peut permettre de rendre les estimations de couples lors du cycle de prédiction plus précises, chaque turbomachine donnée pouvant ainsi bénéficier de ses propres lois empiriques, qui tiennent alors compte de ses propres spécificités techniques.

En outre, opter pour un modèle empirique peut permettre de rendre plus simples et moins coûteuses en capacités de calcul les estimations des couples lors d'un cycle de prédiction du procédé.

Dans certains modes de réalisation, le procédé de sécurisation permet la sécurisation du fonctionnement de l'ensemble tournant d'une turbopompe en tant que turbomachine, ledit ensemble tournant comprenant ladite turbine et une pompe en tant que machine tournante.

On pourrait toutefois prévoir, sans sortir du cadre de la présente invention, d'appliquer ledit procédé de sécurisation à un tout autre type de turbomachine, pourvu seulement que l'on puisse estimer les couple moteur et résistant appliqués sur son ensemble tournant (par exemple et non limitativement avec au moins un moteur électrique) pour pouvoir calculer une vitesse de rotation de prédiction de ce dernier et ensuite agir sur le fonctionnement de la turbomachine lorsque cette vitesse de rotation de prédiction dépasse un seuil de vitesse prédéterminé.

En particulier, dans certains modes de réalisation, ledit procédé de sécurisation peut sécuriser le fonctionnement de l'ensemble tournant d'un turbocompresseur en tant que turbomachine, ledit ensemble tournant comprenant ladite turbine et un compresseur en tant que machine tournante.

Par ailleurs, dans certains modes de réalisation, lorsque la turbomachine est une turbopompe, on peut, au cours du cycle de prédiction, mesurer un débit en entrée de la pompe du fluide entrainé en tant que paramètre « interaction fluide/machine tournante » ; et estimer le couple résistant à partir de la vitesse de rotation réelle et de ce débit mesuré.

On peut ainsi exploiter des mesures de conditions aux interfaces de la turbopompe, notamment de sa pompe, pour obtenir de tels paramètres « interaction fluide/machine tournante » qui contribuent à l'estimation du couple résistant.

On comprend en outre que l'on peut ainsi élaborer un modèle d'estimation du couple résistant, de préférence empirique, qui est simple et peu coûteux en capacités de calcul.

Notamment, dans certains modes de réalisation, au cours de l'étape d'étalonnage précitée, on peut mesurer d'une part le couple résistant (par exemple à l'aide d'un couplemètre), et d'autre part les valeurs adoptées par d'autres paramètres pour chaque couple résistant ainsi mesuré (en particulier, les valeurs adoptées par chacun des deux paramètres suivants : une vitesse de rotation réelle de la turbomachine ; et un débit en entrée de la pompe du fluide entrainé).

Puis, au cours de cette étape d'étalonnage, on peut élaborer une loi empirique du couple résistant en fonction desdits autres paramètres, à partir du tableau de correspondance entre les différents relevés de valeurs ainsi préalablement mesurées.

Cette loi empirique peut alors servir de modèle d'estimation du couple résistant lors du cycle de prédiction du procédé de sécurisation.

Par ailleurs, dans certains modes de réalisation, la machine tournante de l'ensemble tournant peut être montée en prise directe avec la turbine de manière à simplifier la structure de la turbomachine et diminuer sa masse.

L'invention sera mieux comprise et ses avantages apparaîtront mieux à la lecture de la description détaillée qui suit, de modes de réalisation indiqués à titre d'exemples non limitatifs. La description se réfère aux dessins annexés sur lesquels
- la figure 1 représente une vue schématique d'une installation comprenant une turbopompe à l'ensemble tournant de laquelle est appliqué un procédé de sécurisation conforme à la présente invention ;
- la figure 2 montre un organigramme d'un exemple de réalisation de ce procédé de sécurisation ;
- la figure 3 est un graphique qui montre la détermination par anticipation du dépassement d'un seuil de vitesse prédéterminé.

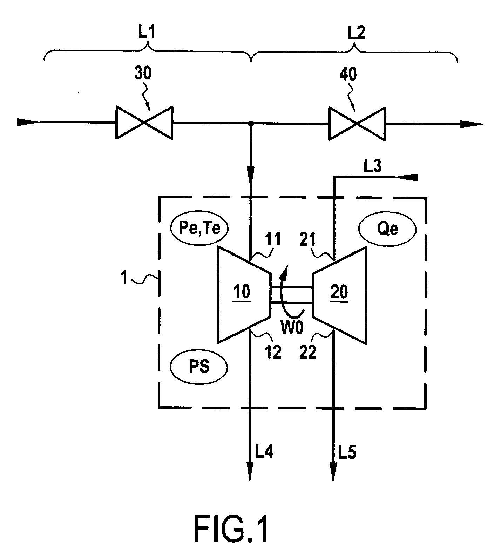

Selon l'exemple illustré en particulier à la figure 1, un procédé de sécurisation conforme à la présente invention permet la sécurisation du fonctionnement de l'ensemble tournant d'une turbopompe 1.

Selon cet exemple, l'ensemble tournant de la turbopompe 1 comprend une turbine 10 dont la rotation est générée par la détente d'un fluide d'entrainement qui est destiné à s'écouler à travers la turbine 10, et une pompe 20 qui est entraînée mécaniquement en rotation par la turbine 10 de manière à déplacer un fluide entrainé qui est destiné à s'écouler à travers la pompe 20.

Selon cet exemple, des lignes d'approvisionnement L1 et d'évacuation L4 en fluide d'entrainement sont respectivement reliées à l'entrée 11 et à la sortie 12 de la turbine 10 de manière à ce que le fluide d'entrainement puisse s'écouler à travers la turbine 10 pour propulser cette dernière.

En outre, une ligne de dérivation L2 du fluide d'entrainement est reliée à la ligne d'approvisionnement L1 de manière à ce que l'entrée 11 de la turbine 10 se trouve disposée en parallèle de la ligne de dérivation L2 par rapport à la ligne d'approvisionnement L1.

Par ailleurs, des lignes d'approvisionnement L3 et d'évacuation L5 en fluide entrainé sont respectivement reliées à l'entrée 21 et à la sortie 22 de la pompe 20 de manière à ce que le fluide entrainé puisse s'écouler à travers la pompe 20 pour être déplacé par cette dernière.

Dans cet exemple, il est prévu que le fluide d'entrainement soit de composition distincte de celle du fluide entrainé, ce à quoi on pourrait toutefois déroger sans sortir du cadre de la présente invention, par exemple de manière à ce qu'un flux d'origine d'un seul et même fluide soit divisé en deux pour constituer d'une part un fluide d'entrainement de la turbine et d'autre part un fluide entrainé par la machine tournante (en particulier par la pompe).

Par ailleurs, la turbopompe 1 est selon cet exemple destinée à participer au fonctionnement d'un moteur de fusée, notamment en constituant un sous-système de ce dernier.

Pour ce faire, la ligne d'approvisionnement L1 peut être reliée, au choix, à la sortie d'une source de gaz qui peut être issue d'une capacité de gaz détendu ou d'un générateur de gaz (non représenté(e) sur la figure 1) du moteur de fusée. Dans le cas d'un générateur de gaz, ce dernier peut être alimenté en entrée par de l'hydrogène et de l'oxygène liquides et fournir à sa sortie un mélange gazeux à haute pression en tant que fluide d'entrainement qui sert à faire tourner la turbine 10.

Ce mélange gazeux, après s'être détendu dans la turbine 10, est dirigé par l'intermédiaire de la ligne d'évacuation L4 vers le divergent de la tuyère (non représenté) du moteur de la fusée.

La propulsion de la turbine 10 résultant de la détente de ce mélange gazeux permet d'entrainer mécaniquement en rotation la pompe 20 de manière à ce que cette dernière effectue un pompage d'un ergol en tant que fluide entrainé, tel que de l'hydrogène liquide ou de l'oxygène liquide (au choix).

L'ergol pénètre dans la pompe 20 par l'intermédiaire de la ligne d'approvisionnement L3, et ressort de la pompe 20 pour être dirigé vers la chambre de combustion (non représentée) du moteur par l'intermédiaire de la ligne d'évacuation L5.

Par ailleurs, la ligne d'approvisionnement L1 comporte une première vanne 30 de manière à pouvoir modifier le débit du fluide d'entrainement en entrée 11 de la turbine 10.

Plus particulièrement, la première vanne 30 contrôle et régule le débit du fluide d'entrainement en entrée 11 de la turbine 10. Cette vanne 30 gère l'asservissement de la vitesse de rotation de la turbopompe 1.

En outre, la ligne de dérivation L2 comporte une deuxième vanne 40.

Selon cet exemple, cette deuxième vanne 40 est destinée à être complètement fermée dans le cadre normal d'utilisation de la turbopompe 1, et à être au moins partiellement ouverte lorsque l'on souhaite opérer un arrêt d'urgence de la turbopompe 1 en cas d'anomalie dans le fonctionnement de cette dernière.

En particulier, lorsque cette deuxième vanne 40 est au moins partiellement ouverte, au moins une partie du fluide d'entrainement en provenance de la ligne d'approvisionnement L1 peut ainsi être déviée vers une torchère (non représentée) par l'intermédiaire de la ligne de dérivation L2 de manière à diminuer le flux du fluide d'entrainement à l'entrée 11 de la turbine 10.

Selon cet exemple, la deuxième vanne 40 est une vanne pyrotechnique, de sorte que, lorsque son ouverture est déclenchée, la deuxième vanne 40 s'ouvre complètement et permet de dévier pratiquement tout, voire entièrement, le flux du fluide d'entrainement vers la torchère et ainsi faire chuter le couple moteur appliqué par la turbine 10 sur l'ensemble tournant de la turbopompe 1.

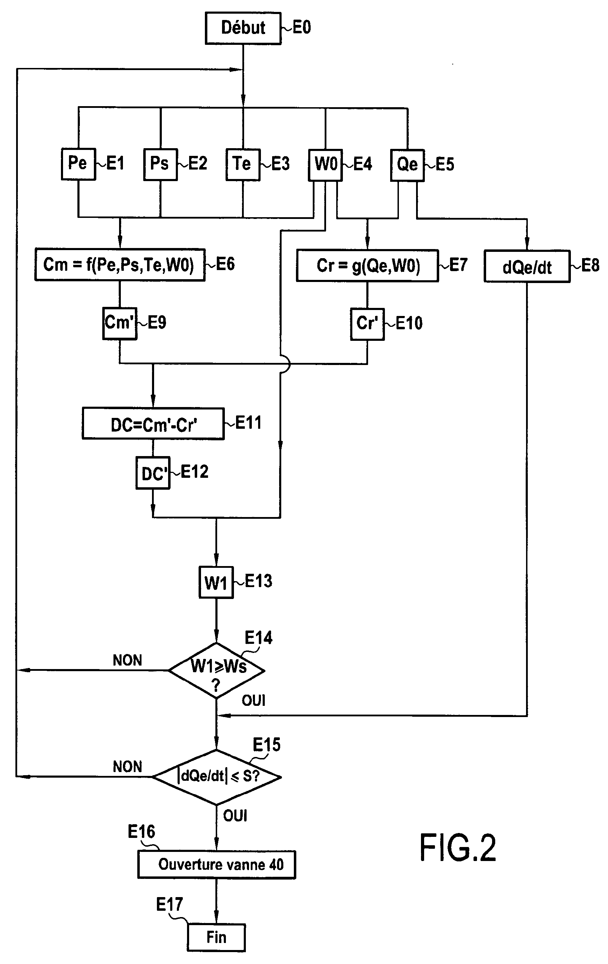

A la figure 2, on a représenté l'organigramme d'un exemple de réalisation non limitatif d'un procédé de sécurisation du fonctionnement de l'ensemble tournant d'une telle turbopompe 1.

Au début, on initialise le procédé de sécurisation (étape d'initialisation E0 sur la figure 2).

Ensuite, on réalise au cours du procédé de sécurisation un cycle de prédiction de manière à anticiper le dépassement par l'ensemble tournant de la turbopompe 1 d'un seuil de vitesse Ws qui est prédéterminé.

Le cycle de prédiction débute dans cet exemple par la mesure des grandeurs suivantes au cours d'un intervalle de temps IT prédéterminé :
- une pression en entrée Pe de la turbine 10 du fluide d'entrainement (étape de mesure E1), cette pression Pe constituant un premier parmi trois paramètres « fluide/turbine » qui sont significatifs de l'interaction entre la turbine 10 et le fluide d'entrainement destiné à la propulser ;
- une pression en sortie Ps de la turbine 10 du fluide d'entrainement (étape de mesure E2), cette pression Ps constituant un autre de ces trois paramètres « fluide/turbine » ;
- une température en entrée Te de la turbine 10 du fluide d'entrainement (étape de mesure E3), cette température Te constituant le dernier de ces trois paramètres « fluide/turbine » ;
- une vitesse de rotation réelle W0 de l'ensemble tournant à un instant d'observation t0 donné dudit intervalle de temps IT (étape de mesure E4) ;
- un débit en entrée Qe de la pompe 20 du fluide entrainé par cette dernière (étape de mesure E5), ce débit Qe constituant un paramètre « fluide/machine tournante » qui est significatif de l'interaction entre la pompe 20 et ce fluide entrainé.

Afin d'améliorer la justesse du cycle de prédiction, il est préférable que l'intervalle de temps prédéterminé IT, au cours duquel chacune des mesures susmentionnées sont effectuées, soit prévu le plus bref possible de manière à ce que les grandeurs Pe, Ps, Te et Qe soient mesurées en des instants respectifs aussi voisins que possible de l'instant d'observation t0 au cours duquel la vitesse de rotation réelle W0 est mesurée (idéalement, que ces grandeurs soient mesurées au cours de ce même instant t0).

En outre, selon l'exemple illustré à la figure 1, la pompe 20 est en prise directe avec la turbine 10, de sorte que la vitesse de rotation de la pompe 20 est égale à la vitesse de rotation de la turbine 10.

Dès lors, on peut en particulier mesurer à l'instant d'observation t0, au choix, une vitesse de rotation de la pompe 20 ou une vitesse de rotation de la turbine 10 en tant que vitesse de rotation réelle W0 de l'ensemble tournant.

Ensuite, une fois que les mesures susmentionnées ont été effectuées (i.e. une fois que les étapes de mesure E1 à E5 ont été effectuées), on estime, au cours du cycle de prédiction :
- le couple moteur Cm appliqué par la turbine 10 sur l'ensemble tournant de la turbopompe 1 (étape d'estimation E6) ;
- le couple résistant Cr appliqué par la pompe 20 sur cet ensemble tournant (étape d'estimation E7).

Selon cet exemple, ce couple moteur Cm est estimé à partir d'une première loi empirique f, dont les variables sont les grandeurs Pe, Ps, Te et W0 préalablement mesurées : Cm = f (Pe, Ps, Te, W0).

En outre, ce couple résistant Cr est estimé indépendamment de l'estimation du couple moteur Cm à partir d'une deuxième loi empirique g qui est décorrélée de la première et dont les variables sont les grandeurs Qe et W0 préalablement mesurées : Cr = g (Qe, W0).

De préférence mais non nécessairement, l'estimation du couple moteur Cm et l'estimation du couple résistant Cr sont réalisées simultanément au cours du cycle de prédiction (i.e. les étapes E6 et E7 sont réalisées simultanément).

En outre, l'estimation du couple moteur Cm et l'estimation du couple résistant Cr peuvent être débutées après que la dernière grandeur susmentionnée ait été mesurée (en particulier après que l'intervalle de temps prédéterminé IT soit achevé).

Par ailleurs, une fois que les couples moteur Cm et résistant Cr ont tous deux été estimés, on calcule leur différence DC.

En particulier, selon cet exemple, on corrige tout d'abord le couple moteur Cm estimé de même que le couple résistant Cr estimé, puis on calcule la différence de couple DC comme étant la différence entre le couple moteur ainsi corrigé Cm' et le couple résistant ainsi corrigé Cr' : DC = Cm' - Cr'

Plus spécifiquement, une fois que le couple moteur Cm a été estimé, on corrige ce dernier au cours du cycle de prédiction pour atténuer les bruits de mesure associés aux grandeurs préalablement mesurées Pe, Ps, Te et/ou W0 (étape de correction E9). On obtient alors un couple moteur corrigé Cm'.

De même, une fois que le couple résistant Cr a été estimé, on corrige ce dernier au cours du cycle de prédiction pour atténuer les bruits de mesure associés aux grandeurs préalablement mesurées Qe et/ou W0 (étape de correction E10). On obtient alors un couple résistant corrigé Cr'.

Selon cet exemple, on corrige les couples moteur Cm et résistant Cr en opérant sur chacun de ces couples un filtrage fréquentiel de type passe-bas avec une ou plusieurs fréquences de coupure qui sont choisies en fonction des fréquences caractéristiques des bruits associés aux grandeurs mesurées correspondantes.

De préférence mais non nécessairement, la correction du couple moteur Cm et la correction du couple résistant Cr sont réalisées simultanément au cours du cycle de prédiction (i.e. les étapes E9 et E10 sont réalisées simultanément).

Ensuite, une fois que le couple moteur corrigé Cm' et le couple résistant corrigé Cr' ont tous deux été obtenus, on calcule leur différence DC au cours du cycle de prédiction (étape de calcul E11).

Ensuite, une fois que la différence de couple DC a été calculée, on élabore une valeur représentative DC' de cette différence au cours du cycle de prédiction (étape d'élaboration E12).

Plus spécifiquement, on corrige la différence de couple DC pour atténuer le biais de valeurs qui existe entre le couple moteur Cm et le couple résistant Cr *(et a fortiori* entre le couple moteur corrigé Cm' et le couple résistant corrigé Cr') du fait qu'ils sont estimés indépendamment l'un de l'autre.

En particulier, on opère un filtrage sur la différence de couple DC préalablement calculée, notamment un filtrage fréquentiel de type passe-haut, de manière à atténuer ledit biais de valeurs.

Une fois que l'on a obtenu la valeur représentative DC' de la différence de couple entre le couple moteur Cm et le couple résistant Cr, on calcule, au cours du cycle de prédiction, une vitesse de rotation de prédiction W1 de l'ensemble tournant à un instant de prédiction t1 ultérieur à l'instant d'observation t0 (étape de calcul E13). Cette vitesse de rotation de prédiction W1 est calculée à partir de la vitesse de rotation réelle W0 préalablement mesurée à cet instant d'observation t0, de la valeur représentative DC' préalablement élaborée et de l'écart de temps t1-t0 entre l'instant de prédiction t1 et l'instant d'observation t0.

Il n'y a pas de restrictions en ce qui concerne le choix de l'écart de temps t1-t0 qui définit l'horizon de temps t1 auquel on souhaite se projeter pour prédire une vitesse de rotation W1 de l'ensemble tournant, par rapport à l'instant d'observation t0 de la vitesse de rotation réelle W0 de cet ensemble tournant.

Il est toutefois préférable de trouver un compromis sur l'écart de temps t1-t0 retenu entre d'une part augmenter cet écart pour mieux anticiper le dépassement par l'ensemble tournant d'un seuil de vitesse Ws prédéterminé, et d'autre part diminuer cet écart pour améliorer la justesse de la valeur de la vitesse de rotation W1 qui est prédite pour l'instant de prédiction t1 par rapport à la valeur que la vitesse de rotation de l'ensemble tournant adoptera réellement à cet instant de prédiction t1.

Un bon compromis entre précision et temps de détection est en particulier trouvé lorsque cet écart de temps t1-t0 est par exemple compris entre 1 et 25 ms, en particulier entre 5 et 20 ms, notamment 10ms environ.

Ensuite, une fois que la vitesse de rotation de prédiction W1 a été calculée, on détermine, au cours du cycle de prédiction, si une première condition est ou non vérifiée (étape de détermination E14).

En particulier, il est déterminé que cette première condition est vérifiée si la vitesse de rotation de prédiction W1 préalablement calculée dépasse un seuil de vitesse Ws prédéterminé.

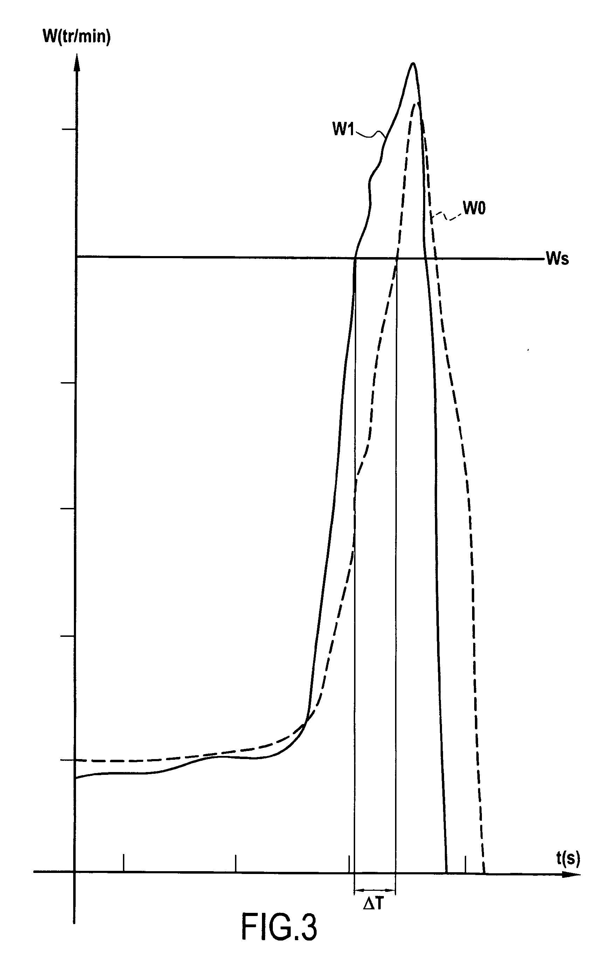

Selon l'exemple illustré à la figure 3, le seuil de vitesse Ws est un seuil « haut » qui est en outre caractéristique d'un départ en survitesse de l'ensemble tournant de la turbopompe 1.

Dès lors, il est déterminé que la première condition est vérifiée si la vitesse de rotation de prédiction W1 est supérieure à ce seuil de vitesse Ws.

S'il est déterminé que la première condition n'est pas vérifiée (NON à l'étape E14), alors le cycle de prédiction est achevé et un nouveau cycle de prédiction similaire à celui précédemment décrit est débuté.

Au contraire, s'il est déterminé que la première condition est vérifiée (OUI à l'étape E14), alors le cycle de prédiction continue et on détermine au cours de ce dernier si une deuxième condition est ou non vérifiée (étape de détermination E15).

En particulier, il est déterminé que cette deuxième condition est vérifiée s'il est évalué que la turbopompe 1 n'est pas en régime transitoire de fonctionnement, notamment au moins pendant le cycle de prédiction, plus spécifiquement au moins pendant l'intervalle de temps IT dans lequel les grandeurs susmentionnées sont mesurées.

On constate en particulier qu'un régime transitoire de fonctionnement, tel qu'une phase de démarrage ou d'arrêt de la turbopompe 1, peut être décelé en analysant les variations du débit en entrée 21 de la pompe 20 du fluide entrainé.

Plus spécifiquement, il s'avère que les variations de ce débit sont bien plus rapides pendant une phase de démarrage ou d'arrêt de la turbopompe 1 qu'elles ne le sont pendant un régime permanent de fonctionnement de cette dernière, et ce, même lorsque la vitesse de rotation de l'ensemble tournant de cette turbopompe 1 augmente très rapidement pendant ce régime permanent de fonctionnement, comme cela peut notamment être le cas lors d'un départ en survitesse de l'ensemble tournant.

Lorsque l'ensemble tournant subit justement un départ en survitesse pendant ce régime permanent de fonctionnement, le débit en entrée de la pompe 20 peut évoluer malgré tout moins rapidement que cette vitesse de rotation.

Selon l'exemple illustré, il est déterminé que la deuxième condition est réalisée, i.e. il est déterminé que la turbopompe 1 n'est pas en régime transitoire de fonctionnement (en particulier pas en train d'être mise en route ou d'être arrêtée) mais au contraire en régime permanent de fonctionnement, si la dérivée dQe/dt du débit en entrée 21 de la pompe 20 du fluide entrainé est, en valeur absolue, inférieure à une variation seuil S de débit qui est prédéterminée.

Selon l'exemple illustré, la dérivée du débit dQe/dt est calculée (étape de calcul E8) à partir du débit Qe qui a été préalablement mesuré au cours du cycle de prédiction.

Selon cet exemple et non nécessairement, cette dérivée dQe/dt est calculée en même temps que sont estimés les couples moteur Cm et résistant Cr au cours du cycle de prédiction (i.e. les étapes E6, E7 et E8 sont effectuées simultanément).

En outre, après qu'il ait été déterminé si oui ou non la deuxième condition est vérifiée, le cycle de prédiction s'achève.

Plus précisément, s'il est déterminé que la deuxième condition n'est pas vérifiée (NON à l'étape E15), alors le cycle de prédiction est achevé et un nouveau cycle de prédiction similaire à celui précédemment décrit est débuté.

Au contraire, s'il est déterminé que la deuxième condition est vérifiée (OUI à l'étape E15), alors le cycle de prédiction est également achevé et on opère ensuite une action sur le fonctionnement de la turbopompe 1 pour limiter l'ampleur du dépassement en vitesse de son ensemble tournant par rapport au seuil de vitesse prédéterminé Ws (étape d'action E16).

En effet, lorsque le procédé de sécurisation arrive à l'étape E16, cela signifie que les première et deuxième conditions ont toutes deux été vérifiées au cours du cycle de prédiction, et donc que la vitesse de rotation de prédiction W1 de l'ensemble tournant à l'instant de prédiction t1 dépasse le seuil de vitesse prédéterminé Ws alors que la turbopompe 1 est normalement en régime permanent de fonctionnement. Il est donc nécessaire d'agir au plus vite sur le fonctionnement de la turbopompe 1 de manière à ce que la vitesse de rotation qu'adoptera réellement l'ensemble tournant à l'instant t1 dépasse le moins possible le seuil de vitesse Ws.

Selon l'exemple illustré, l'action opérée sur le fonctionnement de la turbopompe 1 comprend un arrêt d'urgence de cette dernière qui consiste en le déclenchement de l'ouverture de la deuxième vanne 40 pour rapidement faire chuter le débit en entrée 11 de la turbine 10 du fluide d'entrainement.

Une fois que cette action a été opérée, le procédé de sécurisation s'achève (étape de fin E17).

On va à présent décrire plus en détail un exemple d'application du procédé de sécurisation précédemment décrit.

Selon cet exemple, la turbopompe 1 précédemment décrite est montée sur un banc d'essai de manière à ce que l'on puisse tester ses performances limites.

Par exemple, on décide, lors d'une première phase d'essai, de faire fonctionner la turbopompe 1 en régime permanent de fonctionnement.

En particulier, on décide de faire tourner l'ensemble tournant de la turbopompe 1 à une vitesse sensiblement constante.

Cette vitesse de rotation sensiblement constante est obtenue par l'asservissement qu'exerce la première vanne 30 sur cette vitesse en régulant le débit en entrée 11 de la turbine 10 du fluide d'entrainement.

En outre, lors de cette première phase, la deuxième vanne 40 est complètement fermée pour diriger tout le flux du fluide d'entrainement vers la turbine 10.

Il est choisi que la vitesse sensiblement constante qu'adopte l'ensemble tournant pendant cette première phase d'essai soit nettement inférieure à un seuil de vitesse Ws qui est choisi pour être caractéristique d'un départ en survitesse de l'ensemble tournant.

Dès lors, pendant toute la première phase d'essais, le cycle de prédiction du procédé de sécurisation précédemment décrit est réalisé répétitivement et s'achève à chaque fois par une détermination que la première condition n'est pas vérifiée (NON à l'étape E14).

A la figure 3, on a tracé sur un même graphique l'évolution en fonction du temps de la vitesse de rotation réelle W0 et de la vitesse de rotation de prédiction W1 qui sont répétitivement obtenues au cours d'une succession de cycles de prédiction.

On voit sur ce graphique que les vitesses W0 et W1 sont sensiblement égales lors de la première phase d'essais. L'étape de correction E12 du cycle de prédiction, au cours de laquelle le biais de valeurs existant entre les couples moteur et résistant est atténué, contribue à l'obtention de telles vitesses W0 et W1 sensiblement égales car cette étape permet d'atténuer la différence de valeurs qui existe entre ces deux couples du fait qu'ils sont estimés indépendamment l'un de l'autre, différence qui en théorie doit être nulle lorsque la vitesse de rotation de l'ensemble tournant est constante.

Par ailleurs, suite à cette première phase d'essais, on réalise une deuxième phase d'essais au cours de laquelle on force l'apparition d'un phénomène de cavitation dans les aubes de la pompe 20 par un changement dans l'écoulement à l'entrée de cette dernière. Ce phénomène de cavitation entraine un départ en survitesse de l'ensemble tournant de la turbopompe 1.

Dès lors, comme illustré sur le graphique de la figure 3, il arrive un stade où la vitesse de rotation de prédiction W1 calculée au cours d'un cycle de prédiction particulier atteint le seuil de vitesse Ws.

La turbopompe 1 n'étant pas en régime transitoire de fonctionnement lorsque ce seuil de vitesse Ws est atteint, ledit cycle de prédiction particulier s'achève par un OUI à l'étape E14 et également d'un OUI à l'étape E15, qui conduisent au déclenchement de l'ouverture de la deuxième vanne 40 de manière à limiter l'ampleur du dépassement en vitesse de l'ensemble tournant de la turbopompe 1 par rapport au seuil Ws.

Comme on peut le constater sur le graphique de la figure 3, grâce au procédé de sécurisation selon la présente invention, on peut anticiper l'instant de franchissement du seuil Ws par la vitesse de prédiction W1 par rapport à l'instant de franchissement de ce seuil Ws par la vitesse réelle W0 avec un temps d'anticipation ΔT.

Par exemple, le temps d'anticipation ΔT peut être compris entre 10 et 200 ms environ, ce qui permet d'anticiper d'autant le déclenchement de l'ouverture de la deuxième vanne 40 et par conséquent de diminuer le risque que l'ensemble tournant ait emmagasiné sur son inertie, à l'instant d'ouverture effective de cette vanne 40, une énergie pouvant causer son endommagement.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de la présente invention.

De plus, les différentes caractéristiques de ces modes ou exemples de réalisation peuvent être utilisées, au choix, seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Procédé de sécurisation du fonctionnement d'un ensemble tournant d'une turbomachine (1), lequel ensemble tournant comprend une turbine (10) dont la rotation est générée par la détente d'un fluide d'entrainement qui est destiné à s'écouler à travers la turbine (10), et une machine tournante (20) qui est entraînée mécaniquement en rotation par la turbine (10) de manière à déplacer un fluide entrainé qui est destiné à s'écouler à travers la machine tournante (20),
le procédé **se caractérisant en ce qu'**on anticipe le dépassement par l'ensemble tournant d'un seuil de vitesse (Ws) prédéterminé en réalisant répétitivement un cycle de prédiction au cours duquel :
- on mesure (E1 à E5) les grandeurs suivantes dans un intervalle de temps prédéterminé :
o une vitesse de rotation réelle (W0) de l'ensemble tournant à un instant d'observation (t0) donné dudit intervalle de temps ;
o au moins un paramètre « interaction fluide/turbine » qui est significatif de l'interaction entre la turbine (10) et le fluide d'entrainement ;
o au moins un paramètre « interaction fluide/machine tournante » qui est significatif de l'interaction entre la machine tournante (20) et le fluide entrainé ;
- on estime (E6) le couple moteur (Cm) appliqué par la turbine (10) sur l'ensemble tournant, à partir de ladite vitesse de rotation réelle (W0) et dudit au moins un paramètre « interaction fluide/turbine » ;
- on estime (E7), indépendamment de l'estimation dudit couple moteur (Cm), le couple résistant (Cr) appliqué par la machine tournante (20) sur l'ensemble tournant, à partir de ladite vitesse de rotation réelle (W0) et dudit au moins un paramètre « interaction fluide/machine tournante »;
- on élabore (E9 à E12) une valeur représentative (DC') de la différence entre ledit couple moteur (Cm) et ledit couple résistant (Cr) ;
- on calcule (E13) une vitesse de rotation de prédiction (W1) de l'ensemble tournant à un instant de prédiction (t1) ultérieur audit instant d'observation (t0), à partir de ladite vitesse de rotation réelle (W0), de ladite valeur représentative (DC'), et de l'écart de temps entre l'instant de prédiction (t1) et l'instant d'observation (t0) ;
- on détermine (E14) qu'une première condition est vérifiée si ladite vitesse de rotation de prédiction (W1) dépasse le seuil de vitesse prédéterminé (Ws),
et **en ce qu'**on opère (E16) une action sur le fonctionnement de la turbomachine (1) pour limiter l'ampleur du dépassement en vitesse de son ensemble tournant par rapport audit seuil (Ws) s'il est déterminé au cours du cycle de prédiction qu'au moins la première condition est vérifiée.

2. Procédé selon la revendication 1, **caractérisé en ce qu'**on détermine (E14) au cours du cycle de prédiction que la première condition est vérifiée si la vitesse de rotation de prédiction (W1) est supérieure au seuil de vitesse prédéterminé (Ws).

3. Procédé selon la revendication 1 ou 2, **caractérisé en ce que** ladite action (E16) opérée comprend un arrêt d'urgence de la turbomachine (1).

4. Procédé selon l'une quelconque des revendications 1 à 3, **caractérisé en ce que** ladite action (E16) opérée comprend une modification d'au moins le débit du fluide d'entrainement en entrée (11) de la turbine (10).

5. Procédé selon la revendication 4, **caractérisé en ce qu'**on réalise ladite modification de débit en déclenchant l'ouverture au moins partielle d'au moins une vanne de dérivation (40) disposée en parallèle de l'entrée (11) de la turbine (10) pour diminuer le débit du fluide d'entrainement en entrée (11) de la turbine (10).

6. Procédé selon l'une quelconque des revendications 1 à 5, **caractérisé en ce qu'**on détermine (E8, E15) au cours du cycle de prédiction qu'une deuxième condition est vérifiée si la turbomachine (1) n'est pas en régime transitoire de fonctionnement,
et **en ce que** ladite action (E16) est opérée s'il est déterminé au cours du cycle de prédiction qu'au moins les première et deuxième conditions sont toutes deux vérifiées.

7. Procédé selon l'une quelconque des revendications 1 à 6, **caractérisé en ce que**, pour élaborer ladite valeur représentative (DC') au cours du cycle de prédiction, on corrige (E9, E10) au moins un des couples estimés parmi le couple moteur (Cm) et le couple résistant (Cr) pour atténuer les bruits de mesure associés aux grandeurs mesurées.

8. Procédé selon l'une quelconque des revendications 1 à 7, **caractérisé en ce que**, pour élaborer ladite valeur représentative (DC') au cours du cycle de prédiction, on atténue (E12) le biais de valeurs qui existe entre le couple moteur (Cm) et le couple résistant (Cr) du fait qu'ils sont estimés indépendamment l'un de l'autre.

9. Procédé selon l'ensemble des revendications 7 et 8, **caractérisé en ce que**, pour élaborer ladite valeur représentative (DC') au cours du cycle de prédiction, on corrige (E9, E10) le couple moteur (Cm) et le couple résistant (Cr) pour atténuer les bruits de mesure associés aux grandeurs mesurées, puis on calcule (E11) la différence (DC) entre le couple moteur corrigé (Cm') et le couple résistant corrigé (Cr'), puis on corrige (E12) cette différence (DC) pour atténuer ledit biais de valeurs.

10. Procédé selon l'une quelconque des revendications 1 à 9, **caractérisé en ce que**, au cours du cycle de prédiction, on mesure (E1 à E3) trois paramètres « interaction fluide/turbine » qui consistent respectivement en une pression en entrée (Pe) de la turbine (10), une pression en sortie (Ps) de la turbine (10), et une température en entrée (Te) de la turbine (10) du fluide d'entrainement ; et on estime (E6) le couple moteur (Cm) à partir de la vitesse de rotation réelle (W0) et de ces trois paramètres « interaction fluide/turbine » (Pe, Ps, Te).

11. Procédé selon l'une quelconque des revendications 1 à 10, **caractérisé en ce qu'**il permet la sécurisation du fonctionnement de l'ensemble tournant d'une turbopompe en tant que turbomachine, ledit ensemble tournant comprenant ladite turbine (10) et une pompe en tant que machine tournante (20).

12. Procédé selon la revendication 11, **caractérisé en ce que**, au cours du cycle de prédiction, on mesure (E5) un débit en entrée (Qe) de la pompe du fluide entrainé en tant que paramètre « interaction fluide/machine tournante » ; et on estime (E7) le couple résistant (Cr) à partir de la vitesse de rotation réelle (W0) et de ce débit mesuré (Qe).

## Patentansprüche

1. Verfahren zur Sicherung des Betriebs einer Dreheinheit einer Turbomaschine (1), wobei die Dreheinheit eine Turbine (10), deren Drehung durch die Druckminderung eines Antriebsfluids, das dazu bestimmt ist, durch die Turbine (10) abzufließen, erzeugt wird, und eine Drehmaschine (20) umfasst, die mechanisch in Drehung von der Turbine (10) angetrieben wird, um ein angetriebenes Fluid, das dazu bestimmt ist, durch die Drehmaschine (20) abzufließen, zu bewegen, wobei das Verfahren **dadurch gekennzeichnet ist, dass** die Überschreitung einer vorbestimmten Geschwindigkeitsschwelle (Ws) durch die Dreheinheit antizipiert wird, wobei auf wiederholte Weise ein Prädiktionszyklus durchgeführt wird, während dessen:
- die folgenden Größen in einem vorbestimmten Zeitintervall gemessen werden (E1 bis E5).
∘ eine reale Drehgeschwindigkeit (W0) der Dreheinheit zu einem gegebenen Beobachtungszeitpunkt (t0) des Zeitintervalls,
∘ mindestens ein Parameter "Interaktion Fluid/Turbine", der für die Interaktion zwischen der Turbine (10) und dem Antriebsfluid signifikant ist,
∘ mindestens ein Parameter "Interaktion Fluid/Drehmaschine", der für die Interaktion zwischen der Drehmaschine (20) und dem angetriebenen Fluid signifikant ist,
- das Antriebsdrehmoment (Cm), das von der Turbine (10) an die Dreheinheit angelegt wird, auf Basis der realen Drehgeschwindigkeit (W0) und des mindestens einen Parameters "Interaktion Fluid/Turbine" bewertet wird (E6),
- unabhängig von der Bewertung des Antriebsdrehmoments (Cm) das Widerstandsmoment (Cr), das von der Drehmaschine (20) an die Dreheinheit angelegt wird, auf Basis der realen Drehgeschwindigkeit (W0) und des mindestens einen Parameters "Interaktion Fluid/Drehmaschine" bewertet wird (E7),
- ein Wert (DC'), der für die Differenz zwischen dem Antriebsdrehmoment (Cm) und dem Widerstandsmoment (Cr) repräsentativ ist, ausgearbeitet wird (E9 bis E12),
- eine Prädiktionsdrehgeschwindigkeit (W1) der Dreheinheit zu einem späteren Prädiktionszeitpunkt (t1) als der Beobachtungszeitpunkt (t0) auf Basis der realen Drehgeschwindigkeit (W0), des repräsentativen Werts (DC') und des Zeitabstands zwischen dem Prädiktionszeitpunkt (t1) und dem Beobachtungszeitpunkt (t0) berechnet wird (E13),
- bestimmt wird (E14), dass eine erste Bedingung überprüft ist, wenn die Prädiktionsdrehgeschwindigkeit (W1) die vorbestimmte Geschwindigkeitsschwelle (Ws) überschreitet,
und dass auf den Betrieb der Turbomaschine (1) eine Aktion ausgeübt (E16), um den Umfang der Geschwindigkeitsüberschreibung ihrer Dreheinheit in Bezug zur Schwelle (Ws) zu begrenzen, wenn während des Prädiktionszyklus bestimmt wird, dass mindestens die erste Bedingung überprüft ist.

2. Verfahren nach Anspruch 1, **dadurch gekennzeichnet, dass** während des Prädiktionszyklus bestimmte wird (E14), dass die erste Bedingung überprüft ist, wenn die Prädiktionsdrehgeschwindigkeit (W1) größer als die vorbestimmte Geschwindigkeitsschwelle (Ws) ist.

3. Verfahren nach Anspruch 1 oder 2, **dadurch gekennzeichnet, dass** die ausgeübte Aktion (E16) einen Notstopp der Turbomaschine (1) umfasst.

4. Verfahren nach einem der Ansprüche 1 bis 3, **dadurch gekennzeichnet, dass** die ausgeübte Aktion (E16) eine Änderung mindestens der Durchflussmenge des Antriebsfluids am Eingang (11) der Turbine (10) umfasst.

5. Verfahren nach Anspruch 4, **dadurch gekennzeichnet, dass** die Durchflussänderung durchgeführt wird, wobei die mindestens teilweise Öffnung mindestens eines Ablenkventils (40), das parallel zum Eingang (11) der Turbine (10) angeordnet ist, ausgelöst wird, um die Durchflussmenge des Antriebsfluids am Eingang (11) der Turbine (10) zu verringern.

6. Verfahren nach einem der Ansprüche 1 bis 5, **dadurch gekennzeichnet, dass** während des Prädiktionszyklus bestimmt wird (E8, E15), dass eine zweite Bedingung überprüft ist, wenn die Turbomaschine (1) nicht transitorischen Betriebsmodus ist, und dass die Aktion (E16) ausgeübt wird, wenn während des Prädiktionszyklus bestimmt wird, dass mindestens die erste und zweite Bedingung alle beide überprüft sind.

7. Verfahren nach einem der Ansprüche 1 bis 6, **dadurch gekennzeichnet, dass** für die Ausarbeitung des repräsentativen Werts (DC') während des Prädiktionszyklus mindestens eines der bewerteten Momente unter dem Antriebsdrehmoment (Cm) und dem Widerstandsmoment (Cr) korrigiert werden (E9, E10), um die mit den gemessenen Größen verbundenen Messgeräusche zu dämpfen.

8. Verfahren nach einem der Ansprüche 1 bis 7, **dadurch gekennzeichnet, dass** für die Ausarbeitung des repräsentativen Werts (DC') während des Prädiktionszyklus die Werteungenauigkeit, die zwischen dem Antriebsdrehmoment (Cm) und dem Widerstandsmoment (Cr) vorhanden ist, da sie unabhängig voneinander bewertet werden, gedämpft wird (E12).

9. Verfahren nach der Gesamtheit der Ansprüche 7 und 8, **dadurch gekennzeichnet, dass** für die Ausarbeitung des repräsentativen Werts (DC') während des Prädiktionszyklus das Antriebsdrehmoment (Cm) und das Widerstandsmoment (Cr) korrigiert werden (E9, E10), um die mit den gemessenen Größen verbundenen Messgeräusche zu dämpfen, dann die Differenz (DC) zwischen dem korrigierten Antriebsdrehmoment (Cm') und dem korrigierten Widerstandsmoment (Cr') berechnet wird (E11), dann diese Differenz (DC) korrigiert wird (E12), um die Werteungenauigkeit zu dämpfen.

10. Verfahren nach einem der Ansprüche 1 bis 9, **dadurch gekennzeichnet, dass** während des Prädiktionszyklus drei Parameter "Interaktion Fluid/Turbine" gemessen werden (E1 bis E3), die in einem Druck am Eingang (Pe) der Turbine (10), einen Druck am Ausgang (Ps) der Turbine (10) bzw. einer Temperatur am Eingang (Te) der Turbine (10) des Antriebsfluids bestehen; und das Antriebsdrehmoment (Cm) auf Basis der realen Drehgeschwindigkeit (W0) und dieser drei Parameter "Interaktion Fluid/Turbine" (Pe, Ps, Te) bewertet wird (E6).

11. Verfahren nach einem der Ansprüche 1 bis 10, **dadurch gekennzeichnet, dass** es die Sicherung des Betriebs der Dreheinheit einer Turbopumpe als Turbomaschine ermöglicht, wobei die Dreheinheit die Turbine (10) und einem Pumpe als Drehmaschine (20) umfasst.

12. Verfahren nach Anspruch 11, **dadurch gekennzeichnet, dass** während des Prädiktionszyklus eine Durchflussmenge am Eingang (Qe) der Pumpe des angetriebenen Fluids als Parameter "Interaktion Fluid/Drehmaschine" gemessen wird (E5), und das Widerstandsmoment (Cr) auf Basis der realen Drehgeschwindigkeit (W0) und dieser gemessenen Durchflussmenge (Qe) bewertet wird (E7).

## Claims

1. A method of making safe the operation of a rotary assembly of a turbomachine (1), which rotary assembly comprises both a turbine (10) that is caused to rotate by expansion of a drive fluid that is to flow through the turbine (10), and a rotary machine (20) that is driven mechanically in rotation by the turbine (10) so as to move a driven fluid that is to flow through the rotary machine (20), the method being **characterized in that** the event of the rotary assembly exceeding a predetermined threshold speed (Ws) is anticipated by repetitively performing a prediction cycle comprising the following steps:
• measuring (E1 to E5) the following magnitudes during a predetermined time interval:
• a real speed of rotation (W0) of the rotary assembly at a given observation instant (t0) of said time interval;
• at least one "fluid/turbine interaction" parameter that is representative of the interaction between the turbine (10) and the drive fluid; and
• at least one "fluid/rotary machine interaction" parameter that is representative of the interaction between the rotary machine (20) and the driven fluid;
• estimating (E6) the driving torque (Cm) applied by the turbine (10) to the rotary assembly, on the basis of said real speed of rotation (W0) and of at least one "fluid/turbine interaction" parameter;
• estimating (E7), independently of estimating said driving torque (Cm), the resisting torque (Cr) applied by the rotary machine (20) to the rotary assembly, from said real speed of rotation (W0) and said at least one "fluid/rotary machine interaction" parameter;
• preparing (E9 to E12) a representative value (DC') that is representative of the difference between said driving torque (Cm) and said resisting torque (Cr);
• calculating (E13) a predicted speed of rotation (W1) for the rotary assembly at a prediction instant (t1) later than said observation instant (t0) on the basis of said real speed of rotation (W0), of said representative value (DC'), and of the time difference between the prediction instant (t1) and the observation instant (t0); and
• determining (E14) that a first condition is satisfied if said predicted speed of rotation (W1) exceeds the predetermined threshold speed (Ws);
and **in that** an action is taken (E16) on the operation of the turbomachine (1) in order to limit the extent to which the speed of its rotary assembly exceeds said threshold speed (Ws) in the event that, during the prediction cycle, it is determined that at least the first condition is satisfied.

2. A method according to claim 1, **characterized in that** during the prediction cycle it is determined (E14) that the first condition is satisfied if the predicted speed of rotation (W1) is greater than the predetermined threshold speed (Ws).

3. A method according to claim 1 or claim 2, **characterized in that** said action that is taken (E16) comprises an emergency stop of the turbomachine (1).

4. A method according to any one of claims 1 to 3, **characterized in that** said action that is taken (E16) comprises modifying at least the flow rate of the drive fluid at the inlet (11) of the turbine (10).

5. A method according to claim 4, **characterized in that** said flow rate modification is performed by tripping at least partial opening of at least one bypass valve (40) connected in parallel with the inlet (11) of the turbine (10) to reduce the flow rate of the drive fluid at the inlet (11) of the turbine (10).

6. A method according to any one of claims 1 to 5, **characterized in that**, during the prediction cycle, it is determined (E8, E15) that a second condition is satisfied, in the event that the turbomachine (1) is not operating under transient conditions; and
**in that** said action is taken (E16) if, during the prediction cycle, it is determined that at least the first and the second conditions are both satisfied.

7. A method according to any one of claims 1 to 6, **characterized in that**, in order to prepare said representative value (DC') during the prediction cycle, at least one of the torques estimated from among the driving torque (Cm) and the resisting torque (Cr) is corrected (E9, E10) in order to attenuate measurement noise associated with the measured magnitudes.

8. A method according to any one of claims 1 to 7, **characterized in that**, in order to prepare said representative value (DC') during the prediction cycle, the value bias that exists between the driving torque (Cm) and the resisting torque (Cr) as a result of them being estimated independently of each other is attenuated (E12).

9. A method according to claims 7 and 8 taken together, **characterized in that**, in order to prepare the representative value (DC') during the prediction cycle, the driving torque (Cm) and the resisting torque (Cr) are corrected (E9, E10) in order to attenuate the measurement noise associated with the measured magnitudes, and then the difference (DC) is calculated (E11) between the corrected driving torque (Cm') and the corrected resisting torque (Cr'), and then this difference (DC) is corrected (E12) in order to attenuate said value bias.

10. A method according to any one of claims 1 to 9, **characterized in that**, during the prediction cycle, three "fluid/turbine interaction" parameters are measured (E1 to E3), consisting respectively in an inlet pressure (Pe) of the turbine (10), an outlet pressure (Ps) of the turbine (10), and a temperature (Te) of the drive fluid at the inlet of the turbine (10); and the driving torque (Cm) is estimated (E6) on the basis of the real speed of rotation (W0) and of these three "fluid/turbine interaction" parameters (Pe, Ps, Te).

11. A method according to any one of claims 1 to 10, **characterized in that** it is used to make safe the operation of the rotary assembly of a turbopump as the turbomachine, said rotary assembly comprising said turbine (10) and a pump as the rotary machine (20).

12. A method according to claim 11, **characterized in that**, during the prediction cycle, a flow rate (Qe) of the driven fluid is measured (E5) at the inlet of the pump as a "fluid/rotary machine interaction" parameter; and the resisting torque (Cr) is estimated (E7) on the basis of the real speed of rotation (W0) and this measured flow rate (Qe).
